# EUROPÄISCHE PATENTANMELDUNG

(11) **EP 1 205 108 A2**
(43) Veröffentlichungstag der Anmeldung: **15.05.2002**
(21) Anmeldenummer: 01121747.8
(22) Anmeldetag: 19.09.2001
(51) Int. Cl.: A01N 43/653, A01N 25/02, A01N 25/30, B27K 3/50

(54) **Wirkstoffhaltige Emulsionen**

(30) Priorität: 02.10.2000 DE 10048797; 31.08.2001 DE 10142453
(71) Anmelder: BAYER AG, 51368 Leverkusen (DE)
(72) Erfinder: Nyssen, Peter-Roger, 41542 Dormagen (DE); Spetmann, Peter, 47829 Krefeld (DE)

(57) **Zusammenfassung**

Emulsionen aus einer wässrigen oder einer wässrig-organischen kontinuierlichen Phase und einer organischen diskontinuierlichen Phase, letztere enthaltend wenigstens
a) eine Kombination der Wirkstoffe Tebuconazol und Propiconazol
b) einen Phenol/Styrol-Polyglykolether der Formel (I) 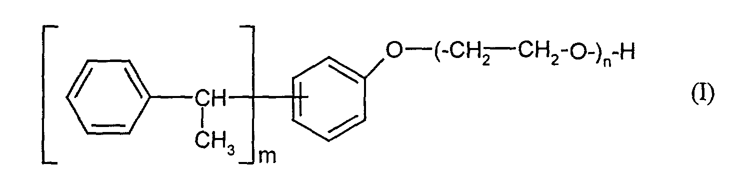 mit m = 2,7 und n = 2 bis 13
   gegebenenfalls
c) ein mit Wasser nicht mischbares organisches Lösungsmittel,
dadurch gekennzeichnet, dass die Komponente a) in b) oder gegebenenfalls in b) und c) zusammen vollständig gelöst mit einem Gehalt von mehr als 0,1 Gew.-%, insbesondere > 1 Gew.-%, besonders bevorzugt > 10 Gew.-% bei 20°C, bezogen auf das Gesamtgewicht der organischen Phase, vorliegt.

## Beschreibung

Die Erfindung betrifft neue Emulsionen, enthaltend die Wirkstoffkombination Tebuconazol und Propiconazol, ein Verfahren zu ihrer Herstellung sowie ihre Verwendung.

Auf verschiedenen Gebieten, wie z.B. dem Pflanzenschutz, Materialschutz oder Pharmagebiet, ist man bestrebt, lagerstabile Wirkstoffkonzentrate herzustellen, welche unmittelbar vor ihrer Anwendung in das Anwendungsmedium in verdünnter Form eingebracht werden können. Viele Wirkstoffe sind jedoch nahezu vollständig wasser-unlöslich bzw. in bevorzugten organischen Lösungsmitteln nur schwer löslich. Man ist aber bestrebt, zunehmend wässrige oder in wässrigen Medien verdünnbare Wirkstoffkonzentrate einzusetzen, wie z.B. Wirkstoffformulierungen in Form von Suspensions- (SC) oder Emulsionskonzentraten (EC). In EC's liegen die Wirkstoffe i.A. in vollständiger Lösung in einem oder mehreren organischen Lösungsmitteln vor, die in Verbindung mit Emulgatoren in Wasser emulgierbar sind. Hinsichtlich ihre Emulsionsstabilität und insbesondere auch hinsichtlich unerwünschter Ausfällung des Wirkstoffes als kristalliner Feststoff in wässrigen Verdünnungen, sind die bekannten Formulierungen von EC's noch verbesserungsfähig. Dies gilt auch hinsichtlich der Erhöhung der Wirkstoffgehalte als auch der Verwendung von biologisch abbaubaren oder gut verträglichen Lösungsmittel.

Mit SC's, insbesondere wässrigen SC's, werden zwar insbesondere wunschgemäß höhere Wirkstoffkonzentrationen erreicht, nachteilig ist jedoch die oft nur mangelnde biologische Wirksamkeit. Selbst Feinstvermahlungen der Wirkstoffe mit mittleren Partikelgrößen im submikronen Bereich erreichen nicht die gewünschte biologische Wirksamkeit.

Tebuconazol und Propiconazol sind wertvolle biozide Wirkstoffe, die allerdings nicht in gewünschter Weise in Emulsionen mit hohem Wirkstoffgehalt überführt werden können. Insbesondere auf einem speziellen Gebiet des Materialschutzes, dem Holzschutz, ist es zudem bisher noch nicht gelungen, ausreichend verdünnungsstabile Emulsionen herzustellen, die bei Applikation mit üblichen Imprägnierverfahren den/die Wirkstoffe ausreichend tief in das Holz einzubringen vermögen.

Die Aufgabe der vorliegenden Erfindung bestand daher darin, ein Formulierungssystem für die Wirkstoffkombination aus Tebuconazol und Propiconazol in Form von wirkstoffhaltigen Emulsionen, insbesondere Mikroemulsionen bereitzustellen, das die oben beschriebenen Nachteile überwindet.

Aufgabe ist ferner, Emulsionskonzentrate mit hohen Gehalten an der Wirkstoffkombination Tebuconazol/Propiconazol auf Basis gut verträglicher Komponenten herzustellen, die bis in die anwendungsmäßig gewünschten hohen Verdünnungen in Wasser ausreichend stabil gegen Flockulation, Sedimentation oder Aufrahmung sowie gegen Auskristallisation oder Ausfällen von Feststoffen (Wirkstoffkristallen) sind, und sich durch eine hohe Eindringtiefe in Holz, insbesondere Frischholz bei Tauch-, Streich- oder Kesseldruck-Imprägnierverfahren auszeichnen.

Die vorliegende Erfindung betrifft daher Emulsionen aus einer wässrigen oder einer wässrig-organischen kontinuierlichen Phase und einer organischen diskontinuierlichen Phase, letztere enthaltend wenigstens
a) eine Kombination der Wirkstoffe Tebuconazol und Propiconazol
b) einen Phenol/Styrol-Polyglykolether der Formel (I) 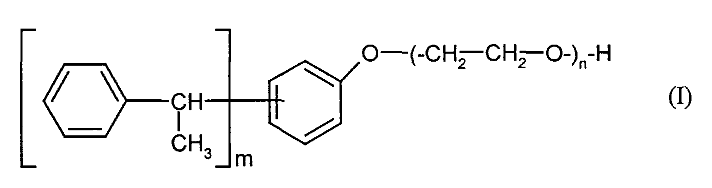 mit m = 2,7 und n = 2 bis 13, vorzugsweise 2 bis 10
c) und gegebenenfalls ein mit Wasser nicht mischbares organisches Lösungsmittel
dadurch gekennzeichnet, dass die Komponente a) in b) oder gegebenenfalls in b) und c) zusammen vollständig gelöst mit einem Gehalt von mehr als 0,1 Gew.-%, insbesondere > 1 Gew.-%, besonders bevorzugt > 10 Gew.-% bei 20°C, bezogen auf das Gesamtgewicht der organischen Phase, vorliegt.

Der Wirkstoff Tebuconazol ist bekannt unter dem Handelsnamen FOLICUR® , (Bayer AG). Der Wirkstoff Propiconazol ist ebenfalls bekannt unter dem Handelsnamen WOCOSEN® Technical, (Fa. Janssen).

Die erfindungsgemäßen Emulsionen können gegebenenfalls weitere bioaktive Wirkstoffe a) enthalten z.B. aus der Gruppe der pharmazeutischen Wirkstoffe sowie der Pflanzenschutzmittel insbesondere Biozide, Mikrobizide, Pestizide, wie Fungizide, Bakterizide, Viruzide, Herbizide, Insektizide, Akarizide, Nematizide, Pflanzenwuchsregulatoren und Vogelrepellents sowie Desinfektionsmittel.

Die erfindungsgemäßen Emulsionen können gegebenenfalls als Komponente b) weitere organische Verbindungen aus der Gruppe der Umsetzungsprodukte von Alkylenoxiden mit alkylierbaren Verbindungen, wie z.B. Fettalkoholen, Fettaminen, Fettsäuren, Phenolen, Alkylphenolen, Carbonsäureamiden und Harzsäuren, vorzugsweise Balsamharz und/oder Abietinsäure enthalten.

Die erfindungsgemäßen Emulsionen können gegebenenfalls als Komponente c) weitere, mit Wasser nicht mischbare organische Lösungsmittel enthalten, z.B. aus der Gruppe der aliphatischen, cycloaliphatischen oder aromatischen Kohlenwasserstoffe oder der acetatischen Lösungsmittel.

Als organische Lösungsmittel (c) kommen bevorzugt natürliche, voll- oder halbsynthetische Verbindungen in Frage sowie gegebenenfalls Mischungen dieser Lösungsmittel, die mit den Verbindungen (b) im Temperaturbereich von 20 bis 130°C vollständig mischbar oder löslich sind. Bevorzugt kommen bei Raumtemperatur flüssige Lösungsmittel in Betracht aus der Gruppe der aliphatischen, cycloaliphatischen oder aromatischen Kohlenwasserstoffe, insbesondere
- Öle, wie z.B. Mineralöle, Paraffine, Isoparaffine, vollsynthetische Öle wie Silikonöle, halbsynthetische Öle auf Basis z.B. Glyceride mittlerer und ungesättigter Fettsäuren, etherische Öle,
- Ester von natürlichen oder synthetischen, gesättigten oder ungesättigten Fettsäuren, vorzugsweise C₈-C₂₂- insbesondere C₈-C₁₈-Fettsäuren, besonders bevorzugt Rapsölmethylester oder 2-Ethylhexyllaurat,
- alkylierte Aromaten und deren Gemische,
- alkylierte Alkohole insbesondere Fettalkohole,
- durch Hydroformyliereung gewonnene lineare, primäre Alkohole,
- Terpenkohlenwasserstoffe und
- naphthenische Öle wie z.B. Enerthene.

Weitere bevorzugte Lösungsmittel der Komponente c) sind solche aus der Gruppe der acetatischen Lösungsmittel wie z.B. 1,2-Propandioldiacetat, 3-Methyl-3-methoxybutylacetat, Essigsäureethylester, etc.. Die Lösungsmittel können einzeln oder in Gemischen untereinander eingesetzt werden.

Neben den Komponenten a) bis c) kann die organische diskontinuierliche Phase der erfindungsgemäßen Emulsionen noch weitere Zusatzstoffe enthalten, welche in Wasser eine Löslichkeit von < 0,1 g/l, in den Komp. b) und/oder c) jedoch eine Löslichkeit von > 10 g/l besitzen.

In einer bevorzugten Zusammensetzung enthält die organische diskontinuierliche Phase der erfindungsgemäßen Emulsionen, bezogen auf die gesamte diskontinuierliche Phase,
a) 0,5 bis 40 Gew.-%, insbesondere 1 bis 20 Gew.-% Propiconazol und Tebuconazol,
b) 20 bis 99,5 Gew.-%, insbesondere 40 bis 99 Gew.-% Verbindung (I)
c) 1 bis 80 Gew.-% eines mit Wasser nicht mischbaren organischen Lösungsmittels, insbesondere 1,2-Propandioldiacetat.

Die kontinuierliche wässrige bzw. wässrige-organische Phase (= Trägerphase der Emulsionströpfchen) der erfindungsgemäßen wirkstoff-haltigen Emulsionen oder Mikroemulsionen enthält vorzugsweise
d) Wasser,
e) gegebenenfalls organisches Lösungsmittel,
f) wenigstens ein natürliches oder synthetisches oberflächenaktives Mittel, das in Wasser (d) eine Löslichkeit von > 10 g/l, insbesondere > 100 g/l bei 20°C besitzt
sowie gegebenenfalls weitere Zuschlagstoffe.

Als organische Lösungsmittel der Komponente (e) kommen bevorzugt in Wasser lösliche oder mischbare Lösungsmittel in Betracht, insbesondere mit einer Löslichkeit in Wasser von > 5,0 g/l bei 20°C, insbesondere > 15 g/l.

Geeignete organische Lösungsmittel sind beispielsweise:
aliphatische C₁-C₄-Alkohole, wie Methanol, Ethanol, Isopropanol, n-Propanol, n-Butanol, Isobutanol oder tert.-Butanol, aliphatische Ketone, wie Aceton, Methylethylketon,Methylisobutylketon oder Diacetonalkohol, Polyole, wie Ethylenglykol, Propylenglykol, Butylenglykol, 1,4-Butandiol, 1,5-Pentandiol, 1,6-Hexandiol, Diethylenglykol, Triethylenglykol, Trimethylolpropan, Polyethylenglykol oder Polypropylenglykol mit einem mittl. Molgewicht von 100 bis 4000 g/mol, vorzugsweise 200 bis 1500 g/mol, oder Glycerin, Monohydroxyether, vorzugsweise Monohydroxyalkylether, besonders bevorzugt Mono-C₁-C₄-alkylglykolether wie Ethylenglykolmonoethyl- oder -monomethylether, Diethylenglykolmonomethylether oder Diethylenglykolmonoethylether, Diethylenglykolmonobutylether, Dipropylenglykolmonoethylether, Thiodiglykol, Triethylenglykolmonomethylether oder -monoethylether, ferner 2-Pyrrolidon, N-Methyl-2-Pyrrolidon, N-Ethyl-Pyrrolidon, N-Vinylpyrrolidon, 1,3-Dimethyl-imidazolidon, Dimethylacetamid sowie Dimethylformamid.

Es kommen auch Gemische von Lösungsmitteln, beispielsweise der genannten, in Frage. Die Menge der eingesetzten Lösungsmittel (e) in der wässrigen kontinuierlichen Phase beträgt i.A. weniger als 60 Gew.-%, vorzugsweise weniger als 40 Gew.-%, bezogen auf die kontinuierliche Phase.

Als oberflächenaktive Mittel (f) werden vorzugsweise in der wässrigen Phase vollständig lösliche Emulgatoren, Netzmittel, Dispergiermittel, Entschäumer oder Lösungsvermittler verstanden. Insbesondere können sie nicht-ionogen, anionogen, katiogen oder amphoter sein bzw. monomerer, oligomerer oder polymerer Natur sein. Die Auswahl der oberflächenaktiven Mittel (f) ist erfindungsgemäß nicht eingeschränkt und muss auf die zu stabilisierende diskontinuierliche Phase im Hinblick auf die gewünschte Art der Emulsion (z.B. Miniemulsion oder Mikroemulsion) sowie die Emulsionstabilität, insbesondere gegen Sedimentation und/oder Aufrahmung der dispersen Phase, abgestimmt werden.

Als bevorzugte oberflächenaktive Mittel der Komponente (f) sind solche von f1) bis f9) zu nennen:
f1) Oxalkylierungsprodukte, die durch Alkoxylierung mit Ethylenoxid oder Propylenoxid von Kondensationsprodukten phenolischer OH-gruppenhaltiger Aromaten mit Formaldehyd und NH-funktionellen Gruppen erhältlich sind.
f2) Wasserlösliche anorganische Salze, insbesondere Borate, Carbonate, Silikate, Sulfate, Sulfite, Selenate, Chloride, Fluoride, Phosphate, Nitrate und Aluminate der Alkali- und Erdalkalimetalle und anderer Metalle, sowie Ammonium;
f3) Polymere, aufgebaut aus wiederkehrenden Succinyl-Einheiten, insbesondere Polyasparaginsäure.
f4) nicht-ionische oder ionisch modifizierte Verbindungen aus der Gruppe der Alkoxylate, Alkylolamide, Ester, Aminoxide und Alkylpolyglykoside, insbesondere
   Umsetzungsprodukte von Alkylenoxiden mit alkylierbaren Verbindungen, wie z.B. Fettalkoholen, Fettaminen, Fettsäuren, Phenolen, Alkylphenolen, Carbonsäureamiden und Harzsäuren. Hierbei handelt es sich z.B. um Ethylenoxidaddukte aus der Klasse der Umsetzungsprodukte von Ethylenoxid mit:
   m) gesättigten und/oder ungesättigten Fettalkoholen mit 6 bis 25 C-Atomen oder
   n) Alkylphenolen mit 4 bis 12 C-Atomen im Alkylrest oder
   o) gesättigten und/oder ungesättigten Fettaminen mit 14 bis 20 C-Atomen oder
   p) gesättigten und/oder ungesättigten Fettsäuren mit 14 bis 22 C-Atomen oder
   q) hydrierten und/oder unhydrierten Harzsäuren,
   r) aus natürlichen oder modifizierten, gegebenenfalls hydrierten Rizinusölfettkörper hergestellte Veresterungs- und/oder Arylierungsprodukte, die gegebenenfalls durch Veresterung mit Dicarbonsäuren zu wiederkehrenden Struktureinheiten verknüpft sind.
f5) ionische oder nicht-ionische Verbindungen aus der Gruppe der Umsetzungsprodukte von Alkylenoxid mit Sorbitanester [Tween® , ICI], oxalkylierte Acetylendiole und -glykole, oxalkylierte Phenole, insbesondere Phenol/Styrol-Polyglykolether gemäß Formel I) und II) mit dem Unterschied, dass n eine Zahl von 14 bis 120 ist, und ionisch modifizierte Phenol/Styrol-Polyglykolether der Formel I) oder II) wie beispielsweise in EP-A 839 879 offenbart [bzw. EP-A-764 695]. Unter dem Begriff "ionische Modifizierung" wird beispielsweise Sulfatierung, Carboxylierung oder Phosphatierung verstanden. Ionisch modifizierte Verbindungen können entweder in Form ihrer freien Säuren oder vorzugsweise als Salz, insbesondere als Alkali- oder Aminsalz, vorzugsweise Diethylaminsalz vorkommen.
f6) ionische oder nichtionische polymere oberflächenaktive Mittel aus der Gruppe der Homo- und Copolymerisate, Pfropf- und Pfropfcopolymerisate sowie statistische und lineare Blockcopolymerisate.
   Beispiele geeigneter polymerer oberflächenaktive Mittel (f6) sind Polyethylenoxide, Polypropylenoxide, Polyoxymethylene, Polytrimethylenoxide, Polyvinylmethylether, Polyethylenimine, Polyacrylsäuren, Polyarylamide, Polymethacrylsäuren, Polymethacrylamide, Poly-N,N-dimethyl-acrylamide, Poly-N-isopropylacrylamide, Poly-N-acrylglycinamide, Poly-N-methacrylglycinamide, Polyvinyloxazolidone, Polyvinylmethyloxazolidone.
f7) anionische oberflächenaktive Mittel wie beispielsweise Alkylsulfate, Ethersulfate, Ethercarboxylate, Phosphatester, Sulfosuccinatamide, Paraffinsulfonate, Olefinsulfonate, Sarcosinate, Isothionate und Taurate.
f8) anionische oberflächenaktive Mittel aus der Gruppe der sog. Dispergiermittel, insbesondere Kondensationsprodukte, die durch Umsetzung von Naphtholen mit Alkanolen, Anlagerung von Alkylenoxid und mindestens teilweiser Überführung der terminalen Hydroxygruppen in Sulfogruppen oder Halbester der Maleinsäure, Phthalsäure oder Bernsteinsäure erhältlich sind, Sulfobernsteinsäureester, Alkylbenzolsulfonate, sowie Salze der Polyacrylsäuren, Polyethylensulfonsäuren, Polystyrolsulfonsäure, Polymethacrylsäuren, Polyphosphorsäuren.
f9) ligninische Verbindungen, vor allem Ligninsulfonate, z.B. solche, die nach dem Sulfit- oder Kraft-Verfahren gewonnen werden. Vorzugsweise handelt es sich um Produkte, die zum Teil hydrolysiert, oxidiert, propoxyliert, sulfoniert, sulfomethyliert oder disulfoniert und nach bekannten Verfahren fraktioniert werden, z.B. nach dem Molekulargewicht oder nach dem Sulfonierungsgrad. Auch Mischungen aus Sulfit- und Kraftligninsulfonaten sind gut wirksam. Besonders geeignet sind Ligninsulfonate mit einem durchschnittlichen Molekulargewicht von größer 1000 bis 100 000, einem Gehalt an aktivem Ligninsulfonat von mindestens 80 % und vorzugsweise mit niedrigem Gehalt an mehrwertigen Kationen. Der Sulfonierungsgrad kann in weiten Grenzen variieren.

In einer besonders bevorzugten Ausführungsform kann die kontinuierliche wässrige Phase zusätzlich zu den genannten oberflächenaktiven Mitteln f), insbesondere f1) bis f9) noch wasserlösliche Block- oder Blockcopolymere der Komponente g) enthalten; bevorzugt handelt es sich dabei um wasserlösliche Block- und Blockcopolymere auf Basis von Ethylen- und/oder Propylenoxid [Pluronic® , BASF] und/ oder wasserlösliche Block- und Blockcopolymere von Ethylen- und/oder Propylenoxid auf bifunktionellen Aminen [Tetronic® , BASF].

Block-Copolymere auf Basis von Polystyrol und Polyalkylenoxid, Poly(meth)-acrylaten und Polyalkylenoxid sowie Poly(meth)acrylaten und Poly(meth)acrylsäuren kommen ebenfalls in Frage.

Die kontinuierliche wässrige Phase kann darüber hinaus noch weitere übliche Zuschlagstoffe enthalten wie z.B. wasserlösliche Netzmittel, Entschäumer und/oder Konservierungsmittel.

Die erfindungsgemäßen Emulsionen enthalten vorzugsweise, bezogen auf die gesamte Emulsion,
1 bis 40 Gew.-%, insbesondere 2 bis 20 Gew.-% der diskontinuierlichen organischen Phase und
60 bis 99 Gew.-% der kontinuierlichen wässrigen oder wässrig-organischen Phase.

Bevorzugte Zusammensetzungen der Emulsionen enthalten, bezogen auf die diskontinuierliche organische Phase,
0 bis 2000 Gew.-%, insbesondere 10 bis 1000 Gew.-% eines oder mehrerer wasserlösliche oberflächenaktive Mittel der Komponente (f),
0 bis 100 Gew.-%, insbesondere 1 bis 50 Gew.-% eines oder mehrerer wasserlösliche Block-Copolymere der Komponente (g) und
0 bis 600 Gew.-%, insbesondere 20 bis 400 Gew.-% eines oder mehrerer wasserlösliche organische Lösungsmittel der Komponente (e) sowie
gegebenenfalls weitere übliche Zuschlagstoffe.

Liegen die Emulsionen als Mikroemulsionen vor, so enthalten sie, bezogen auf die diskontinuierliche organische Phase, vorzugsweise
10 bis 2000 Gew.-%, insbesondere 100 bis 1000 Gew.-% eines oder mehrere wasserlösliche oberflächenaktive Mittel der Komponente (f),
0 bis 100 Gew.-%, insbesondere 1 bis 50 Gew.-% eines oder mehrere wasserlösliche Block-Copolymere der Komponente (g) und
0 bis 600 Gew.-%, insbesondere 20 bis 400 Gew.-% eines oder mehrere wasserlösliche organische Lösungsmittel der Komponente (e) sowie
gegebenenfalls weitere übliche Zuschlagstoffe.

Als bevorzugte Emulsionstypen sind zu nennen:

| | |
|---|---|
| Makroemulsion | enthält Tropfen > 2 µm (mikroskopisch) |
| Miniemulsion | Tropfendurchmesser 0,1 bis 2 µm, trüb |
| Mikroemulsion | Tropfendurchmesser < 0,1 µm; transparent |

Mikroemulsionen sind dabei besonders bevorzugt.

Durch die Erfindung ist es überraschenderweise gelungen, besonders hohe Gehalte an Wirkstoffen in der diskontinuierlichen Phase - sprich den Emulsionströpfchen - bei Normaltemperatur (20°C) stabil in Lösung zu halten. Insbesondere im Falle von Mikroemulsionen (d.h. klare Emulsionen) konnten an Wirkstoffen (a) erheblich höhere Gehalte erreicht werden, als die bei Normaltemperatur (20°C) bestimmte Grenz-Löslichkeit der reinen Wirkstoffe (a) in den organischen Verbindungen (b) und ggf. Lösungsmittel (c) erwarten ließ.

Die Erfindung beinhaltet daher auch ein Verfahren zur Herstellung der erfindungsgemäßen wirkstoffhaltigen Emulsionen beispielsweise der Makro- oder Mikroemulsionen, in dem der jeweilige Wirkstoff (a) in der organischen Verbindung (b) gegebenenfalls unter Mitverwendung des Lösungsmittels c) bei einer Temperatur von 20 bis 200°C vollständig gelöst wird, die Lösung gegebenenfalls in dem genannten Temperaturbereich heiß filtriert wird, und anschließend die erhaltene Lösung, selbstverständlich unter Einhaltung der für die vollständige Löslichkeit des Wirkstoffes erforderliche Temperatur, in die wässrige bzw. wässrig-organische Phase emulgiert wird, die erhaltene Emulsion beispielsweise Makro- oder Mikroemulsion auf eine Temperatur von 10 bis 70°C, vorzugsweise unter 60°C abgekühlt wird und gegebenenfalls abschließend filtriert wird.

Das Verfahren kann auch in Form der sog. Umkehremulsion durchgeführt werden, in dem zunächst ein Teil der wässrigen bzw. wässrig-organischen Phase in die wirkstoffhaltige (Öl)phase eingebracht und emulgiert wird (Typ W/O-Emulsion) und anschließend durch sukkzessives Auffüllen mit dem Rest der wässrigen Phase in die gewünschte Emulsion (Typ O/W-Emulsion) überführt wird.

Zur Dispergierung (Emulgierung) kommen Verfahren in Betracht wie Rühren, Dissolveremulgieren, Emulgieren mittels Rotor-Stator-Maschinen, Ultraturrax, Hochdruckhomogenisator, Strahldispergierung und Ultraschallbehandlung. Die Wahl der Methode ist abhängig von der gewünschten Feinverteilung der diskontinuierlichen Phase (Makroemulsion, Miniemulsion oder Mikroemulsion).

Die Verfahren können sowohl in Batch- als auch in kontinuierlicher Form zur Anwendung kommen, i.A. wird eine kontinuierliche Verfahrensführung bevorzugt, da hierbei die beiden Phasen gegebenenfalls unter Druck und Scherenergieeintrag auf kleinem Raum intensiv vermischt und emulgiert werden können und unmittelbar anschließend auf die für die Stabilisierung der Emulsion erforderliche Temperatur (im Hinblick auf Ausfällung des Wirkstoffes aus der diskontinuierlichen Phase (bzw. aus der organischen Verbindung b)) in kürzest möglicher Zeit abgekühlt werden kann. Besonders bevorzugt wird eine kontinuierliche Verfahrensführung zur Erzielung von Mikroemulsionen oder Miniemulsionen mit einer maximalen Tropfengröße der diskontinuierlichen Phase von < 1 µm, insbesondere < 0,5 µm, ganz besonders < 0,1 µm. Im Allgemeinen werden zunächst beide Phasen getrennt hergestellt beispielsweise durch Lösen und Rühren der Komponenten gegebenenfalls unter Temperaturerhöhung sowie anschließender kontinuierlicher Zuführung in eine Emulgiervorrichtung.

Bevorzugt werden Verfahren, in dem die Emulgierung unter hohem Energieeintrag erfolgt, beispielsweise Ultraschall-, Hochdruckhomogenisierung oder Strahldispergierung bei Drücken von 2 bis 2500 bar, insbesondere 20 bis 1000 bar, in einer oder mehreren Passagen. Das besonders bevorzugte Strahldispergierverfahren sowie geeignete Vorrichtungen dafür sind beispielsweise in DE-A 19536 845 erläutert. Insbesondere können nach diesem Verfahren und geeigneter Temperaturführung Mikroemulsionen erhalten werden mit besonders großer Langzeitstabilität und sehr hohem Wirkstoffgehalt, die in die unten genannten Anwendungen eingebracht werden können.

Die Endeinstellung auf die gewünschten Eigenschaften wie Viskosität, Fließverhalten und Konservierung kann sowohl vor, während oder nach der Emulgierung durch Zugabe von Wasser oder weitere Zusatzstoffe erfolgen.

Die erfindungsgemäßen Emulsionen eignen sich vorzüglich zum Schutz von Holz oder Holzwerkstoffen vor Befall durch holzzerstörende oder holzverfärbende Mikroorganismen.

Zur Anwendung für den Holzschutz werden die erfindungsgemäßen Emulsionen in Wasser oder wasser-basierende, gegebenenfalls bindemittelhaltige Trägerlösungen oder -dispersionen feinteilig mittels der oben genannten Verfahren dispergiert. Die erfindungsgemäßen wirkstoffhaltigen Emulsionen zeichnen sich dabei durch hohe chemische (z.B. hydrolytische) und physikalische Stabilität in Verbindung mit einer für die Wirkstoffentfaltung sehr guten Feinverteilung aus und sind daher rein wässrigen Formulierungen der Wirkstoffe weit überlegen. Die Wirkstoffe penetrieren außerdem tief und dauerhaft in das Holz. Besonders bevorzugt ist dabei die Verwendung der wirkstoffhaltigen Emulsionen zur fungiziden Ausrüstung von Holz, insbesondere Frischholz sowie zur Imprägnierung. Hierbei werden erfindungsgemäße Emulsionen in Form von Konzentraten in Wasser auf eine gewünschte Wirkstärke verdünnt und diese Verdünnungen mittels Tauch-, Streich- oder Kesseldruck-Imprägnierverfahren auf Holz aufgebracht, wobei vor allem erfindungsgemäße Emulsionen in Form von Mikroemulsionen sich durch eine gute Wirkstoffpenetration und Wirkstofflangzeitstabiltät auszeichnen.

### Beispiele

### Beispiel 1

Zur Herstellung der diskontinuierlichen organische Phase wurden
a) 14 Gew.-% Tebuconazol und 15 Gew.-% Propiconazol bei Raumtemperatur in
b) 44 Gew.-% 1,2-Propandioldiacetat vollständig gelöst und anschließend
c) 27 Gew.-% Phenol/Styrol-Polyglykolether der Formel (I) mit m = 2,7 und n = 10 zugesetzt.

Die so erhaltene Ölphase wurde anschließend mittels Schnellrührer bei Raumtemperatur in die wässrig-organische, kontinuierliche Phase bestehend aus 99,10 Gew.-% deionisiertem Wasser und 0,10 Gew.-% Silikonentschäumer eingetragen und ca. 0,5 Minuten dispergiert.
Es wurde eine Emulsion mit folgenden Eigenschaften erhalten.

| **Emulsion** | **Art** | **Makro-E.** |
|---|---|---|
| | diskontinuierliche Phase | 2,00 % |
| | kontinuierliche Phase | 98,00 % |

| **Beurteilung Emulsion** | **Anfangs-Konsistenz** | **milchig flüssig** |
|---|---|---|
| nach 1 Woche bei RT | Mikroskop Tropfengröße | > 10 µm |
| nach 1 Woche bei RT | Mikroskop Kristalle | nein |
| nach 1 Woche bei RT | Emulsionstrennung | geflockt |
| nach 1 Woche bei RT | kristalliner Bodensatz | nein |
| nach 2 Wochen bei RT | kristalliner Bodensatz | nein |

| **Beurteilung diskontinuierliche Ölphase** | **Viskosität** | **klar, flüssig** |
|---|---|---|
| nach 1 Woche bei RT | Rekristallisation | nein |

### Beispiel 2

Zur Herstellung der diskontinuierlichen Phase wurde wie in Beispiel 1 verfahren.

Die so erhaltene Ölphase wurde anschließend mittels Schnellrührer unter Beihaltung der Temperatur in die wässrig-organische, kontinuierliche Phase bestehend aus 85,0 Gew.-% deionisiertem Wasser, 7,40 Gew.-% Emulgator® KS (=alkoxylierter Rizinusölfettkörper, Bayer AG) 7,40 Gew.-% Dispergiermittel VPSP 25031 (ionisch modifizierter Phenol/Styrol-Polyglykolether gemäß Isp. 10 der WO-A 9937718) und 0,20 Gew.-% Silikonentschäumer eingetragen und ca. 0,5 Minuten dispergiert.

Es wurde eine Emulsion mit folgenden Eigenschaften erhalten

| **Emulsion** | **Art** | **Mikro-E.** |
|---|---|---|
| | diskontinuierliche Phase | 1,00 % |
| | kontinuierliche Phase | 99,00 % |

| **Beurteilung Emulsion** | **Anfangs-Konsistenz** | **klar flüssig** |
|---|---|---|
| nach 1 Woche bei RT | Mikroskop Tropfengröße | nicht bestimmt |
| nach 1 Woche bei RT | Mikroskop Kristalle | nein |
| nach 1 Woche bei RT | Emulsionstrennung | nein |
| nach 1 Woche bei RT | kristalliner Bodensatz | nein |
| nach 2 Wochen bei RT | kristalliner Bodensatz | nein |

| **Beurteilung diskontinuierliche Ölphase** | **Viskosität** | **klar, flüssig** |
|---|---|---|
| nach 1 Woche bei RT | Rekristallisation | nein |

## Patentansprüche

1. Emulsionen aus einer wässrigen oder einer wässrig-organischen kontinuierlichen Phase und einer organischen diskontinuierlichen Phase, letztere enthaltend wenigstens
a) eine Kombination der Wirkstoffe Tebuconazol und Propiconazol
b) einen Phenol/Styrol-Polyglykolether der Formel (I) 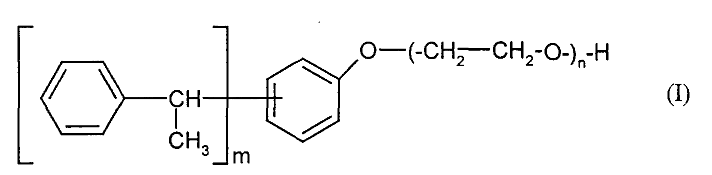 mit m = 2,7 und n = 2 bis 13
und gegebenenfalls
c) ein mit Wasser nicht mischbares organisches Lösungsmittel.
**dadurch gekennzeichnet, dass** die Komponente a) in b) oder gegebenenfalls in b) und c) zusammen vollständig gelöst mit einem Gehalt von mehr als 0,1 Gew.-%, insbesondere > 1 Gew.-%, besonders bevorzugt > 10 Gew.-% bei 20°C, bezogen auf das Gesamtgewicht der organischen Phase, vorliegt.

2. Emulsionen gemäß Anspruch 1, **dadurch gekennzeichnet, dass** sie
a) Phenol/Styrol-Polyglykolether der Formel (I) mit n = 10
und
c) 1,2-Propandioldiacetat enthalten.

3. Emulsionen gemäß Ansprüchen 1 und 2, **dadurch gekennzeichnet, dass**, bezogen auf die gesamte Emulsion,
1 bis 40 Gew.-%, insbesondere 2 bis 20 Gew.-% der diskontinuierlichen organischen Phase und
60 bis 99 Gew.-% der kontinuierlichen wässrigen oder wässrig-organischen Phase
enthalten sind.

4. Emulsionen gemäß Ansprüchen 1 und 2, **dadurch gekennzeichnet, dass** die kontinuierliche wässrige oder wässrig-organische Phase
d) Wasser
e) gegebenenfalls organisches Lösungsmittel
f) gegebenenfalls ein natürliches oder synthetisches oberflächenaktives Mittel, das in Wasser eine Löslichkeit von > 10 g/l, insbesondere > 100 g/l bei 20°C besitzt,
enthält.

5. Emulsionen gemäß Ansprüchen 1 und 2, **dadurch gekennzeichnet, dass**, bezogen auf die diskontinuierliche organische Phase,
e) 0 bis 600 Gew.-%, insbesondere 20 bis 400 Gew.-% eines oder mehrerer wasserlöslicher organischer Lösungsmittel,
f) 0 bis 2000 Gew.-%, insbesondere 1 bis 1000 Gew.-% eines oder mehrerer wasserlöslicher oberflächenaktiver Mittel, und
g) 0 bis 100 Gew.-%, insbesondere 1 bis 50 Gew.-% eines oder mehrerer wasserlöslicher Block- oder Block-Copolymere
sowie gegebenenfalls weitere übliche Zuschlagstoffe enthalten sind.

6. Emulsionen gemäß Ansprüchen 1 und 2, **dadurch gekennzeichnet, dass** sie als Mikroemulsionen vorliegen.

7. Mikroemulsionen gemäß Anspruch 6, **dadurch gekennzeichnet, dass**, bezogen auf die diskontinuierliche organische Phase,
e) 0 bis 600 Gew.-%, insbesondere 20 bis 400 Gew.-% eines oder mehrerer wasserlöslicher organischer Lösungsmittel,
f) 10 bis 2000 Gew.-%, insbesondere 100 bis 1000 Gew.-% eines oder mehrerer wasserlöslicher oberflächenaktiver Mittel, und
g) 0 bis 100 Gew.-%, insbesondere 1 bis 50 Gew.-% eines oder mehrerer wasserlöslicher Block- oder Block-Copolymerer sowie gegebenenfalls weitere übliche Zuschlagstoffe enthalten sind.

8. Verfahren zur Herstellung der Emulsionen gemäß Anspruch 1, **dadurch gekennzeichnet, dass** die Wirkstoffe (a) in der organischen Verbindung (b) unter Mitverwendung des Lösungsmittels c) bei einer Temperatur von 20 bis 200°C vollständig gelöst werden, die Lösung gegebenenfalls in dem genannten Temperaturbereich heiß filtriert wird, anschließend die erhaltene Lösung in die wässrige bzw. wässrig-organische Phase emulgiert wird, die erhaltene Emulsion auf eine Temperatur von 10 bis 70°C, vorzugsweise unter 60°C abgekühlt wird und gegebenenfalls abschließend filtriert wird.

9. Verwendung von Emulsionen gemäß Anspruch 1 zum Schutz von Holz oder Holzwerkstoffen vor Befall durch holzzerstörende oder holzverfärbende Mikroorganismen.

10. Emulsionen gemäß Ansprüchen 1 und 2 enthaltend als Komponente a) 0,5 bis 40 Gew.-% einer Mischung aus Propiconazol und Tebuconazol, bezogen auf die gesamte diskontinuierliche Phase
b) 20 bis 99,5 Gew.-% Verbindung (I) mit n = 10
und
c) 1 bis 80 Gew.-% 1,2-Propandioldiacetat.
